(19) Europäisches Patentamt
European Patent Office
Office européen des brevets

(11) **EP 4 521 161 A1**

(12) **EUROPEAN PATENT APPLICATION**
published in accordance with Art. 153(4) EPC

(43) Date of publication:
**12.03.2025 Bulletin 2025/11**

(21) Application number: **23867848.6**

(22) Date of filing: **04.07.2023**

(51) International Patent Classification (IPC):
**G02F 1/133** (2006.01)   **G02F 1/13** (2006.01)

(52) Cooperative Patent Classification (CPC):
**G02F 1/13; G02F 1/133**

(86) International application number:
**PCT/JP2023/024804**

(87) International publication number:
**WO 2024/062721 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.09.2022 JP 2022149927**

(71) Applicant: **Hamamatsu Photonics K.K.
Hamamatsu-shi, Shizuoka 435-8558 (JP)**

(72) Inventor: **ITO Haruyasu
Hamamatsu-shi, Shizuoka 435-8558 (JP)**

(74) Representative: **Grünecker Patent- und
Rechtsanwälte
PartG mbB
Leopoldstraße 4
80802 München (DE)**

(54) **LIGHT MODULATION DEVICE AND METHOD FOR CONTROLLING SPATIAL LIGHT MODULATOR**

(57) A light modulation device includes a light source; a controller; and a spatial light modulator. The light source outputs laser light having an intensity corresponding to a set intensity. The spatial light modulator includes a plurality of pixel electrodes, a liquid crystal layer, a driver, and a cooler. The liquid crystal layer modulates a phase of the laser light according to a magnitude of an electric field formed by each of the plurality of pixel electrodes. The driver applies a voltage to each of the plurality of pixel electrodes. The cooler cools the liquid crystal layer such that a temperature of the liquid crystal layer approaches a set temperature. The controller determines the set temperature of the cooler based on the set intensity of the laser light.

*Fig.1*

# EP 4 521 161 A1

## Description

### Technical Field

The present disclosure relates to a light modulation device and a method for controlling a spatial light modulator. Priority is claimed on Japanese Patent Application No. 2022-149927, filed on September 21, 2022, the entire content of which is incorporated herein by reference.

### Background Art

Patent Literature 1 discloses a spatial light modulation device and a spatial light modulation method. The spatial light modulation device modulates the phase of incident light for each of a plurality of pixels arranged one-dimensionally or two-dimensionally. The spatial light modulation device includes a liquid crystal layer, a temperature sensor, a plurality of pixel electrodes, and a voltage generation unit. The liquid crystal layer modulates the phase of the incident light according to the magnitude of an applied electric field. The temperature sensor generates a temperature signal that is a signal corresponding to the temperature of the liquid crystal layer. The pixel electrode is provided for each pixel, and applies a voltage, which generates an applied electric field, to the liquid crystal layer. The voltage generation unit provides the voltage to the plurality of pixel electrodes. The voltage generation unit includes storage means. The storage means stores, in advance, one or a plurality of coefficients included in a function representing a correlation between a temperature change amount with respect to a reference temperature of the liquid crystal layer and the amount of variation in a phase modulation amount in the liquid crystal layer. The voltage generation unit performs calculation to correct the magnitude of the voltage using the temperature indicated by the temperature signal provided from the temperature sensor and the one or plurality of coefficients.

### Citation List

#### Patent Literature

Patent Literature 1: Japanese Unexamined Patent Publication No. 2012-168391

### Summary of Invention

#### Technical Problem

Conventionally, a technique for modulating the phase of light using a spatial light modulator (SLM) is known. A liquid crystal spatial light modulator includes a liquid crystal layer and a plurality of pixel electrodes provided along the liquid crystal layer. When a voltage is applied to the pixel electrode, liquid crystal molecules rotate according to the magnitude of the voltage, and the birefringence index of the liquid crystal changes. When light is incident on the liquid crystal layer, the phase of the light changes inside the liquid crystal layer, and light having a phase difference with respect to the incident light is emitted to the outside. A relationship between the phase difference of the emitted light before and after the application of the voltage, namely, a phase modulation amount and the magnitude of the application voltage represents the phase modulation characteristic of the spatial light modulator. In the phase modulation characteristic, the relationship between the phase modulation amount and the application voltage is nonlinear. In order to easily convert such a nonlinear relationship, a lookup table (LUT) showing a correspondence relationship between a gradation value representing the phase modulation amount and the application voltage is used.

When the temperature of the liquid crystal layer changes, the relationship between the phase modulation amount and the application voltage varies. Namely, even when a certain voltage is applied, the phase modulation amount differs depending on the temperature of the liquid crystal layer at that time. In the spatial light modulation device and the spatial light modulation method disclosed in Patent Literature 1, the magnitude of the application voltage is corrected using the temperature of the liquid crystal layer detected by the temperature sensor, based on the correlation between the temperature change amount with respect to the reference temperature of the liquid crystal layer and the amount of variation in the phase modulation amount in the liquid crystal layer.

However, in many cases, the temperature sensor is disposed, for example, on a back surface opposite to a light-incident surface of the spatial light modulator at a position separated from the liquid crystal layer. Therefore, various components such as a substrate are interposed between the liquid crystal layer and the temperature sensor, and the temperature detected by the temperature sensor deviates from the temperature of the liquid crystal layer. Particularly, when the intensity of light incident on the liquid crystal layer increases, the temperature of the liquid crystal layer increases significantly due to the energy of the light, and the deviation in temperature between the liquid crystal layer and the temperature sensor increases. When the deviation in temperature between the liquid crystal layer and the temperature sensor is large, it becomes difficult to accurately correct the magnitude of the application voltage even when the temperature detected by the temperature sensor is used. As a result, an actual phase modulation amount deviates from a target phase modulation amount. Such a phenomenon causes serious problems depending on the application in which the spatial light modulator is used. For example, in laser processing, when a workpiece is irradiated with laser light output from a laser light source via the spatial light modulator, a deviation in phase modulation amount significantly affects processing accuracy. When the spatial light modulator is used in a microscope, an ophthalmoscope, or the like, a useful observation image cannot be obtained depending on the usage temperature thereof, which is a risk.

An object of the present disclosure is to provide a light modulation device and a method for controlling a spatial light modulator capable of reducing the deviation of an actual phase modulation amount from a target phase modulation amount.

**Solution to Problem**

[0008]

　　[1] A first light modulation device according to one embodiment of the present disclosure includes a light source; a spatial light modulator; and a controller. The light source outputs light having an intensity corresponding to a set intensity. The spatial light modulator includes a plurality of pixel electrodes, a liquid crystal layer, a driver, and a cooler. The plurality of pixel electrodes are arranged one-dimensionally or two-dimensionally. The liquid crystal layer modulates a phase of the light according to a magnitude of an electric field formed by each of the pixel electrodes. The driver applies a voltage to each of the plurality of pixel electrodes. The cooler cools the liquid crystal layer such that a temperature of the liquid crystal layer approaches a set temperature. The controller determines the set temperature of the cooler. The controller determines the set temperature based on the set intensity.

　　[2] A first control method for a spatial light modulator according to one embodiment of the present disclosure is a method for controlling a spatial light modulator. The spatial light modulator includes a plurality of pixel electrodes, a liquid crystal layer, a driver, and a cooler. The plurality of pixel electrodes are arranged one-dimensionally or two-dimensionally. The liquid crystal layer modulates a phase of light according to a magnitude of an electric field formed by each of the pixel electrodes. The driver applies a voltage to each of the plurality of pixel electrodes. The cooler cools the liquid crystal layer such that a temperature of the liquid crystal layer approaches a set temperature. The first control method includes a determination step of determining the set temperature of the cooler; and a light input step of inputting light having an intensity corresponding to a set intensity to the liquid crystal layer. In the determination step, the set temperature is determined based on the set intensity.

As described above, when the intensity of light incident on the liquid crystal layer increases, the temperature of the liquid crystal layer increases significantly due to the energy of the light, and the deviation in temperature between the liquid crystal layer and a temperature sensor increases. Therefore, in the first light modulation device and the first control method, in the controller or the determination step, when the temperature of the liquid crystal layer is to be brought closer to a predetermined temperature, the set temperature of the cooler is determined based on the set intensity of the light such that the larger the set intensity of the light input to the liquid crystal layer is, the lower the set temperature of the cooler becomes than the predetermined temperature. Accordingly, the temperature of the liquid crystal layer can be brought closer to constant temperature regardless of the magnitude of the intensity of the light incident on the liquid crystal layer, so that the magnitude of an application voltage can be accurately set, and an actual phase modulation amount can be brought closer to a target phase modulation amount with high accuracy. Therefore, according to the first light modulation device and the first control method, the deviation of the actual phase modulation amount from the target phase modulation amount can be reduced. Incidentally, in the first light modulation device and the first control method, a relationship between the phase modulation amount and the magnitude of the application voltage is set, for example, based not on the set temperature but on the predetermined temperature.

[3] In the first light modulation device according to the above [1], the controller may hold, in advance, a data table showing a relationship between the set intensity and the set temperature, and determine the set temperature using the data table. [4] Alternatively, in the first light modulation device according to the above [1], the controller may hold, in advance, a calculation formula indicating a relationship between the set intensity and the set temperature, and determine the set temperature using the calculation formula. In both cases, the controller can easily determine the set temperature according to the set intensity. Similarly, [5] in the determination step of the first control method according to the above [2], the set temperature may be determined using a data table showing a relationship between the set intensity and the set temperature. [6] Alternatively, in the determination step of the first control method according to the above [2], the set temperature may be determined using a calculation formula indicating a relationship between the set intensity and the set temperature. In both cases, in the determination step, the set temperature can be easily determined according to the set intensity.

[7] In the first light modulation device according to any one of the above [1], [3], and [4], the set temperature may be proportional to the set intensity. [8] Similarly, in the first control method according to any one of the above [2], [5], and [6], the set temperature may be proportional to the set intensity. According to the findings of the present inventors, the temperature of the liquid crystal layer deviates from the temperature detected by the temperature sensor in proportion to the intensity of the light input to the liquid crystal layer. By determining the set temperature of the cooler to be proportional to the set intensity of the light, the temperature of the liquid crystal layer can be brought closer to a more constant temperature regardless of the magnitude of the intensity of the light incident on the liquid crystal layer, and the actual phase modulation amount can be brought closer to the target phase modulation amount with higher accuracy. Therefore, the deviation of the actual phase modulation amount from the target phase modulation amount can be further reduced.

[9] A second light modulation device according to one embodiment of the present disclosure includes a light source; a spatial light modulator; and a controller. The light source outputs light having an intensity corresponding to a set intensity. The spatial light modulator includes a plurality of pixel electrodes, a liquid crystal layer, a driver, and a cooler. The plurality of pixel electrodes are arranged one-dimensionally or two-dimensionally. The liquid crystal layer modulates a phase of light according to a magnitude of an electric field formed by each of the pixel electrodes. The driver applies a voltage to each of the plurality of pixel electrodes. The cooler cools the liquid crystal layer such that a temperature of the liquid crystal layer approaches a set temperature. The controller determines a magnitude of the voltage applied to the plurality of pixel electrodes. When the controller sets a phase of each pixel of the liquid crystal layer to a predetermined phase, the controller determines the magnitude of the voltage such that the voltage corresponding to the predetermined phase becomes larger as the set intensity becomes larger.

[10] A second control method for a spatial light modulator according to one embodiment of the present disclosure is a method for controlling a spatial light modulator. The spatial light modulator includes a plurality of pixel electrodes, a liquid crystal layer, a driver, and a cooler. The plurality of pixel electrodes are arranged one-dimensionally or two-dimensionally. The liquid crystal layer modulates a phase of light according to a magnitude of an electric field formed by each of the plurality of pixel electrodes. The driver applies a voltage to each of the plurality of pixel electrodes. The cooler cools the liquid crystal layer such that a temperature of the liquid crystal layer approaches a set temperature. The second control method includes a determination step of determining a magnitude of the voltage applied to each of the plurality of pixel electrodes; and a light input step of inputting light having an intensity corresponding to a set intensity to the liquid crystal layer. In the determination step, when a phase of each pixel of the liquid crystal layer is set to a predetermined phase, the magnitude of the voltage is determined such that the voltage corresponding to the predetermined phase becomes larger as the set intensity becomes larger.

As described above, when the intensity of light incident on the liquid crystal layer increases, the temperature of the liquid crystal layer increases significantly due to the energy of the light, and the deviation in temperature between the liquid crystal layer and a temperature sensor increases. In addition, since the refractive index of the liquid crystal decreases as the temperature increases, the phase modulation amount caused by the liquid crystal layer when a certain magnitude of voltage is applied decreases as the temperature of the liquid crystal layer increases (namely, as the intensity of the light input to the liquid crystal layer increases). Therefore, in the second light modulation device and the second control method, in the controller or the determination step, when the phase of each pixel of the liquid crystal layer is set to the predetermined phase, the magnitude of the voltage input to the liquid crystal layer is determined such that the voltage corresponding to the predetermined phase becomes larger as the set intensity of the light becomes larger. Accordingly, even when the temperature of the liquid crystal layer varies with a variation in the intensity of the light incident on the liquid crystal layer, the actual phase modulation amount can be brought closer to the target phase modulation amount with high accuracy. Therefore, according to the second light modulation device and the second control method, the deviation of the actual phase modulation amount from the target phase modulation amount can be reduced.

[11] In the second light modulation device according to the above [9], the controller may have correlation data indicating a correlation between the set intensity and the number of gradations, the number of gradations being used in a lookup table showing a relationship between the magnitude of the voltage and each of a plurality of gradation values. The controller may determine the number of gradations used in the lookup table based on the set intensity using the correlation data. In this case, the controller can easily determine the magnitude of the voltage according to the set intensity. [12] Similarly, the determination step of the second control method according to the above [10] may have correlation data indicating a correlation between the number of gradations used in a lookup table showing a relationship between the magnitude of the voltage and each of a plurality of gradation values and the set intensity. In the determination step, the number of gradations used in the lookup table may be determined based on the set intensity using the correlation data. In this case, in the determination step, the magnitude of the voltage can be easily determined according to the set intensity.

[13] In the second light modulation device according to the above [11], the controller may have reference data indicating a correspondence between a phase modulation amount caused by the liquid crystal layer and each of the gradation values of the lookup table, receive an input value indicating the phase modulation amount from an outside of the light modulation device, and convert the input value into a gradation value using the reference data. In this case, a person who uses the second light modulation device can freely set the phase modulation amount. [14] Similarly, in the determination step of the second control method according to the above [12], an input value indicating a phase modulation amount may be input from an outside of the light modulation device, and the input value may be converted into a gradation value using reference data indicating a correspondence between the phase modulation amount caused by the liquid crystal layer and each of the gradation values of the lookup table. In this case, the person who uses the second control method can freely set the phase modulation amount.

[15] In the second light modulation device according to the above [9], the controller may determine the lookup table to be used based on the set intensity using correlation data indicating a correlation between the number of gradations and the set intensity from among a plurality of lookup tables each showing a relationship between the magnitude of the voltage and each of a plurality of gradation values and having a different number of gradations. In this case, the controller can easily determine the magnitude of the voltage according to the set intensity. [16] Similarly, in the determination step of the second control method according to the above [10], the lookup table to be used may be determined based on the set intensity using correlation data indicating a correlation between the number of gradations and the set intensity from among a plurality of lookup tables each showing a relationship between the magnitude of the voltage and each of a plurality of gradation values and having a different number of gradations. In this case, in the determination step, the magnitude of the voltage can be easily determined according to the set intensity.

[17] In the second light modulation device according to the above [15], the controller may have a plurality of reference data indicating a correspondence between a phase modulation amount caused by the liquid crystal layer and each of the gradation values of each of the plurality of lookup tables, receive an input value indicating the phase modulation amount from an outside of the light modulation device, and convert the input value into a gradation value using the reference data corresponding to the lookup table to be used among the plurality of reference data. In this case, a person who uses the second light modulation device can freely set the phase modulation amount. [18] Similarly, in the determination step of the second control method according to the above [16], an input value indicating a phase modulation amount may be input from an outside of the light modulation device, and the input value may be converted into a gradation value using reference data corresponding to the lookup table to be used among a plurality of the reference indicating a correspondence between the phase modulation amount caused by the liquid crystal layer and each of the gradation values of each of the plurality of lookup tables. In this case, the person who uses the second control method can freely set the phase modulation amount.

## Advantageous Effects of Invention

According to the present disclosure, it is possible to provide the light modulation device and the method for controlling a spatial light modulator capable of reducing the deviation of the actual phase modulation amount from the target phase modulation amount.

## Brief Description of Drawings

[FIG. 1] FIG. 1 is a view schematically showing a configuration of a light modulation device according to a first embodiment of the present disclosure.
[FIG. 2] FIG. 2 is a view schematically showing a cross-sectional structure of a light modulation element.
[FIG. 3] FIG. 3 is a view of a plurality of pixel electrodes when viewed in a normal direction of a light incident and emitting surface.
[FIG. 4] FIG. 4 is a perspective view showing the appearance of a container that accommodates a spatial light modulator.
[FIG. 5] FIG. 5 is a perspective view showing a configuration of the spatial light modulator.
[FIG. 6] FIG. 6 is a view showing an example of a lookup table.
[FIG. 7] FIG. 7 is a view schematically showing a configuration of a test device for examining a relationship between a phase modulation amount of the light modulation element and an application voltage to the pixel electrode.
[FIG. 8] FIG. 8 is a graph showing an example of a relationship between a gradation value corresponding to the phase change amount and a light intensity measured by a power meter.
[FIG. 9] FIG. 9 is a graph showing the result of measuring a relationship between the gradation value input to the light modulation element and the phase modulation amount.
[FIG. 10] FIG. 10 is a graph showing the relationship between the gradation value and the phase modulation amount.
[FIG. 11] FIG. 11 is a graph showing a relationship between the gradation value and the phase change amount when the temperature of a liquid crystal layer is controlled to 20°C and 25°C.
[FIG. 12] FIG. 12 is a graph showing one example of a relationship between the light intensity of test light and a maximum phase modulation amount of the light modulation element when the set temperature of a cooler is 20°C and 25°C.

[FIG. 13] FIG. 13 is a graph showing an example of a relationship between the set intensity of laser light and the set temperature of the cooler, which allows the phase modulation amount to be kept constant.

[FIG. 14] FIG. 14 is a flowchart showing a method for controlling the spatial light modulator according to the first embodiment.

[FIG. 15] FIG. 15 is a graph showing one example of a relationship between the gradation value and the phase modulation amount.

[FIG. 16] FIG. 16 is a graph showing one example of correlation data.

[FIG. 17] (a) and (b) in FIG. 17 are views showing examples of reference data.

[FIG. 18] FIG. 18 is a flowchart showing a method for controlling a spatial light modulator according to a second embodiment.

**Description of Embodiments**

Hereinafter, embodiments of a light modulation device and a method for controlling a spatial light modulator according to the present disclosure will be described in detail with reference to the accompanying drawings. In the description of the drawings, the same elements are denoted by the same reference signs, and duplicate descriptions will be omitted.

[First embodiment]

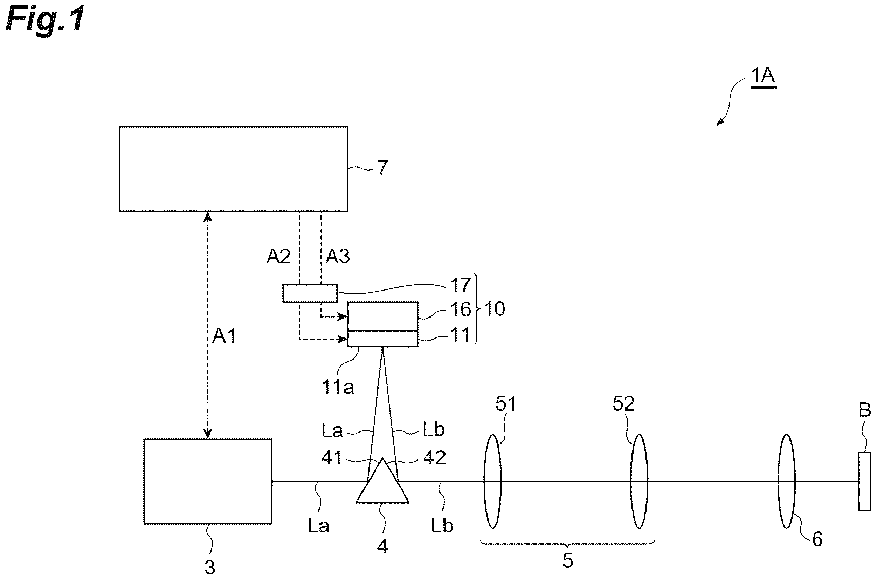

FIG. 1 is a view schematically showing a configuration of a light modulation device 1A according to a first embodiment of the present disclosure. As shown in FIG. 1, the light modulation device 1A of the present embodiment includes a light source 3, a mirror 4, an image-forming optical system 5, a condenser lens 6, a controller 7 (controller), and a spatial light modulator 10. In the light modulation device 1A of the present embodiment, for example, in laser processing, an object B that is a workpiece is irradiated with laser light La output from the light source 3 via the spatial light modulator 10. Alternatively, for example, in a microscope such as a fluorescence microscope, the light modulation device 1A of the present embodiment irradiates the object B, which is an object to be observed, with the laser light La output from the light source 3 via the spatial light modulator 10.

The light source 3 outputs the laser light La. The light source 3 is configured to output, for example, the laser light La that is single-wavelength and linearly polarized light. The light source 3 is configured to repeatedly output the laser light La having a pulse waveform with an extremely short time width, for example, on the order of picoseconds or the order of femtoseconds. A wavelength of the laser light La is, for example, 1030 nm. A pulse width of the laser light La is, for example, 10 picoseconds. A pulse repetition frequency of the laser light La is, for example, 1 MHz. The light source 3 is configured to be able to change the intensity of the laser light La, receives a signal indicating a set intensity from the outside of the light modulation device 1A or the controller 7, and outputs the laser light La having an intensity corresponding to the set intensity. The intensity referred to here is the peak intensity of each pulse. Alternatively, the intensity referred to here may be the time-averaged value of the light intensity within a certain period of time.

The mirror 4 is disposed to face a light incident and emitting surface 11a of the spatial light modulator 10. The mirror 4 is, for example, of a prism type, and has two flat reflecting surfaces 41 and 42. The reflecting surface 41 is disposed on an optical path between the light source 3 and the light incident and emitting surface 11a of the spatial light modulator 10, and optically couples the light source 3 and the light incident and emitting surface 11a. The laser light La output from the light source 3 is reflected by the reflecting surface 41, and reaches the light incident and emitting surface 11a. The direction of incidence of the laser light La on the light incident and emitting surface 11a is inclined with respect to a normal direction of the light incident and emitting surface 11a. The reflecting surface 42 is disposed on an optical path between the light incident and emitting surface 11a and the image-forming optical system 5, and optically couples the light incident and emitting surface 11a and the image-forming optical system 5. Laser light Lb after modulation output from the light incident and emitting surface 11a is reflected by the reflecting surface 42, and reaches the image-forming optical system 5. An emission direction of the laser light Lb from the light incident and emitting surface 11a is inclined opposite to the laser light La with respect to the normal direction of the light incident and emitting surface 11a. In one example, a portion of an optical axis between the light source 3 and the reflecting surface 41, the portion being closer to the reflecting surface 41, is located on the same straight line as a portion of an optical axis between the reflecting surface 42 and the image-forming optical system 5, the portion being closer to the reflecting surface 42.

The image-forming optical system 5 optically couples the light incident and emitting surface 11a of the spatial light modulator 10 and the condenser lens 6. The image-forming optical system 5 includes, for example, a pair of lenses 51 and 52. The lenses 51 and 52 are disposed side by side on an optical axis between the reflecting surface 42 and the condenser lens 6. The lenses 51 and 52 constitute, for example, a double-sided telecentric optical system.

The condenser lens (objective lens) 6 focuses the laser light Lb after modulation, which is output from the light incident and emitting surface 11a of the spatial light modulator 10, toward the object B. The condenser lens 6 is optically coupled to the light incident and emitting surface 11a via the image-forming optical system 5 and the reflecting surface 42.

The spatial light modulator 10 includes a light modulation element 11, a temperature adjustment unit 16, and an external control board 17 (controller). The light modulation element 11 includes a plurality of pixels arranged one-dimensionally or two-dimensionally, and modulates the phase of the laser light La, which is input to the light incident and emitting surface 11a, for each pixel to generate the laser light Lb after modulation. The light modulation element 11 of the present embodiment has a reflective configuration; however, the light modulation element 11 may have a transmissive configuration.

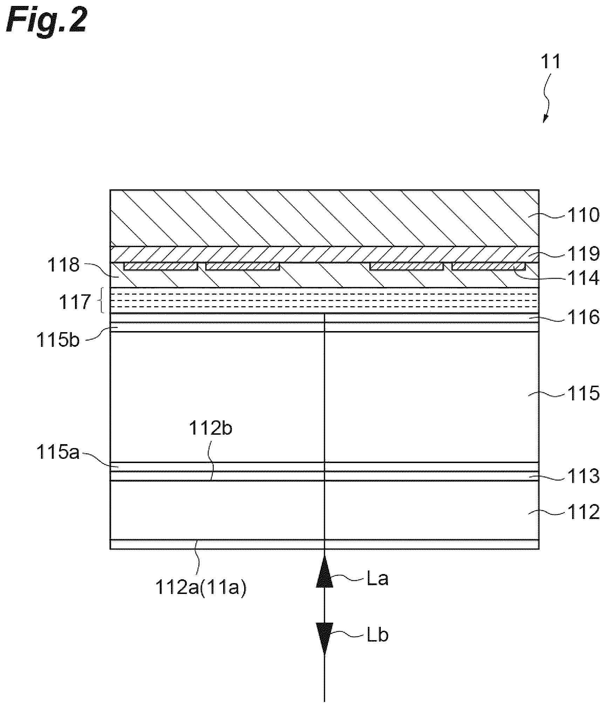

FIG. 2 is a view schematically showing a cross-sectional structure of the light modulation element 11. As shown in FIG. 2, the light modulation element 11 includes a silicon substrate 110, a glass substrate 112, a transparent conductive film 113, a plurality of pixel electrodes 114, a liquid crystal layer 115, a transparent layer (phase shift layer) 116, a dielectric multilayer film (reflective layer) 117, a light-shielding layer 118, and a drive circuit layer 119 (controller). The transparent layer 116 may not be provided.

The glass substrate 112 has a front surface 112a and a back surface 112b. The front surface 112a of the glass substrate 112 constitutes the light incident and emitting surface 11a of the light modulation element 11. The glass substrate 112 transmits the laser light La, which is incident from the light incident and emitting surface 11a (front surface 112a), into the inside of the light modulation element 11. The transparent conductive film 113 is provided on the back surface 112b of the glass substrate 112, and mainly contains a conductive material (for example, ITO) that transmits the laser light La.

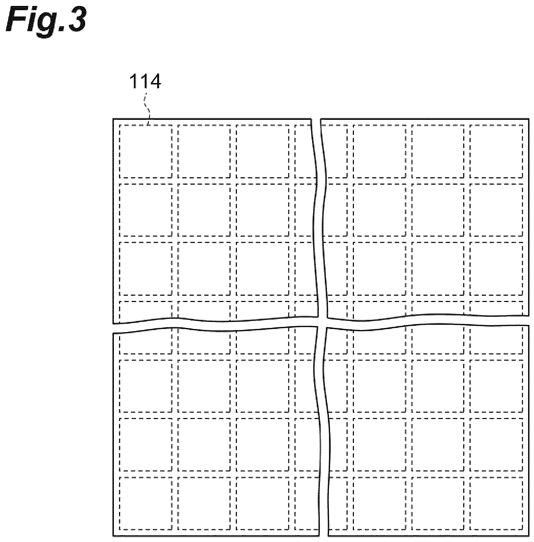

FIG. 3 is a view showing the plurality of pixel electrodes 114 when viewed in the normal direction of the light incident and emitting surface 11a. As shown in FIG. 3, the plurality of pixel electrodes 114 are arranged one-dimensionally or two-dimensionally, and constitute a plurality of pixels of the light modulation element 11. Each of the pixel electrodes 114 is made of, for example, a metal material such as aluminum, and front surfaces of the pixel electrodes 114 are processed to be flat and smooth. The plurality of pixel electrodes 114 are driven by an active-matrix circuit (driver) provided in the drive circuit layer 119. The active-matrix circuit is provided between the plurality of pixel electrodes 114 and the silicon substrate 110, and applies a voltage of a magnitude corresponding to a phase modulation amount required for each pixel to each of the pixel electrodes 114. The active-matrix circuit includes, for example, a first driver circuit that applies a voltage to each pixel row aligned in an X-axis direction, and a second driver circuit that applies a voltage to each pixel row aligned in a Y-axis direction. A voltage is applied to the pixel electrode 114 of the pixel designated by the first and second driver circuits.

The liquid crystal layer 115 is disposed between the transparent conductive film 113 and the pixel electrodes 114, and modulates the phase of the laser light La according to the magnitude of an electric field formed by each of the pixel electrodes 114. When a voltage is applied to a certain pixel electrode 114 by the active-matrix circuit, an electric field is formed between the transparent conductive film 113 and the pixel electrode 114. The electric field is applied to each of the dielectric multilayer film 117 and the liquid crystal layer 115 at a ratio corresponding to a thickness thereof. Then, an arrangement direction of liquid crystal molecules changes according to the magnitude of the electric field applied to the liquid crystal layer 115. When the laser light La transmits through the glass substrate 112 and the transparent conductive film 113, and is incident on the liquid crystal layer 115, the laser light La is phase-modulated by the liquid crystal molecules while passing through the liquid crystal layer 115. The laser light La is reflected by the dielectric multilayer film 117, and then is extracted as the laser light Lb while being phase-modulated again by the liquid crystal layer 115.

In the present embodiment, the liquid crystal layer 115 includes alignment films 115a and 115b. The alignment films 115a and 115b are formed on both end surfaces of the liquid crystal layer 115, and arrange liquid crystal molecule groups in a certain direction. The alignment films 115a and 115b are made of, for example, a polymer material such as polyimide, and alignment films having surfaces in contact with the liquid crystal layer 115 that are subjected to rubbing treatment or the like are applied.

The transparent layer 116 shifts the phase at an interface with the liquid crystal layer 115 such that the peaks of the laser light La incident from a glass substrate 112 side and the laser light La reflected by the dielectric multilayer film 117 do not overlap each other. An optical thickness of the transparent layer 116 is set to be equal to or larger than the wavelength of the laser light La. Alternatively, the optical thickness of the transparent layer 116 is set to be equal to or larger than ($\tau \times$ c)/30, where $\tau$ is the pulse width of the laser light La and c is the speed of light. The constituent material of the transparent layer 116 mainly contains, for example, $SiO_2$ and/or $Nb_2O_5$. As described above, the transparent layer 116 may not be provided.

The dielectric multilayer film 117 is provided between the liquid crystal layer 115 and the light-shielding layer 118 (between the transparent layer 116 and the light-shielding layer 118 when the transparent layer 116 is provided). The dielectric multilayer film 117 reflects the laser light La, for example, at high reflectance larger than 99%. The constituent material of the dielectric multilayer film 117 is, for example, a material in which $SiO_2$ and $TiO_2$ are alternately stacked. The constituent material of the dielectric multilayer film 117 is not particularly limited thereto, and may be changed as appropriate such as adopting $HfO_2$ instead of $TiO_2$ or adopting $MgF_2$ instead of $SiO_2$.

The light-shielding layer 118 is disposed between the dielectric multilayer film 117 and the pixel electrodes 114, and is formed directly on the front surfaces of the plurality of pixel electrodes 114. The light-shielding layer 118 suppresses the occurrence of light leakage.

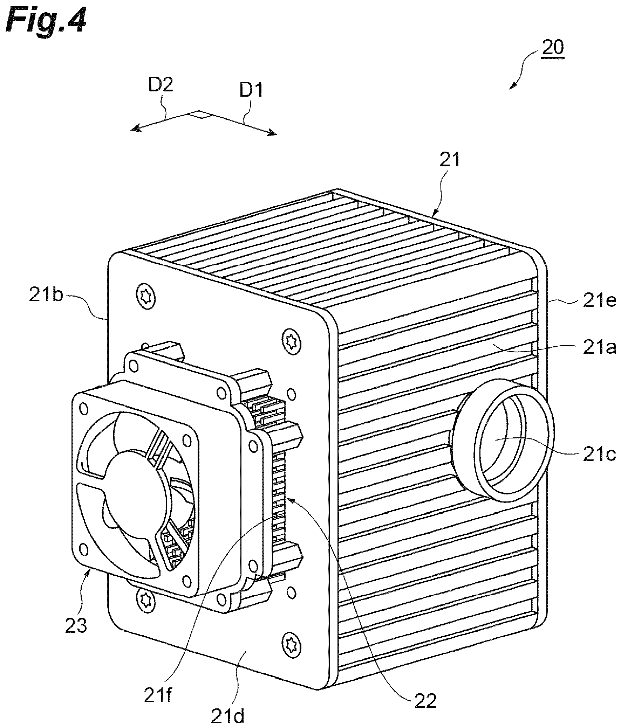

FIG. 4 is a perspective view showing the appearance of a container 20 that accommodates the spatial light modulator 10. The container 20 shown in FIG. 4 includes a housing 21, a heat sink 22, and a fan 23. The housing 21 is a hollow container having a substantially rectangular parallelepiped shape or a substantially cubic shape. The housing 21 is made of, for example, metal. The housing 21 has a pair of side surfaces 21a and 21b aligned in a certain direction D1. In addition, the housing 21 includes an optical window 21c on each of the side surfaces 21a and 21b. In the figure, only the optical window 21c on the side surface 21a is shown. The optical window 21c on the side surface 21a faces the optical window 21c on the side surface 21b in the direction D1. The housing 21 has a pair of side surfaces 21d and 21e aligned in a direction D2 intersecting the direction D1. The heat sink 22 and the fan 23 are attached to one of the side surfaces 21d and 21e, namely, the side surface 21d. The heat sink 22 includes a plurality of projections on an outer surface thereof. The heat sink 22 is fixed in a state where the heat sink 22 is inserted into an opening 21f having a rectangular shape formed in the side surface 21d. The fan 23 is disposed to cover the outer surface of the heat sink 22. The fan 23 is fixed to the side surface 21d. The fan 23 blows air onto the outer surface of the heat sink 22 to cool the heat sink 22.

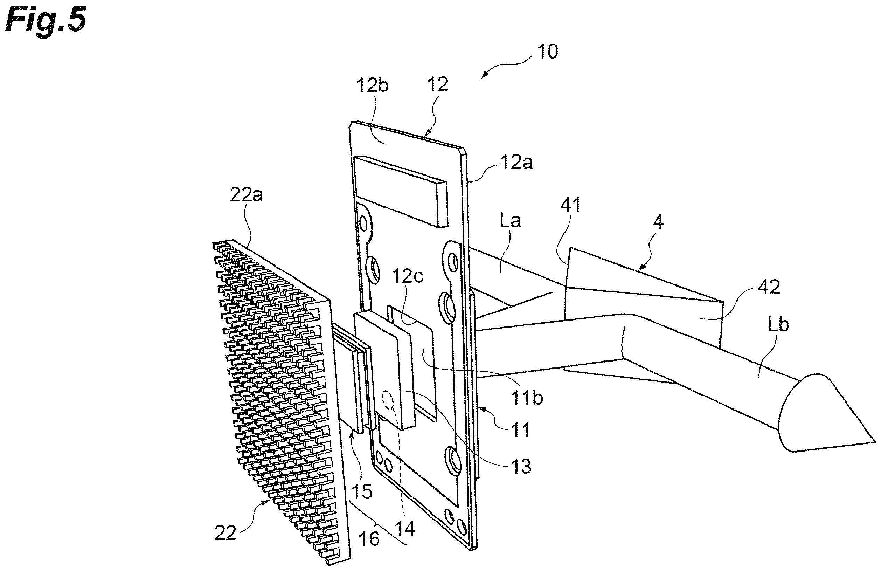

FIG. 5 is a perspective view showing a configuration of the spatial light modulator 10. The spatial light modulator 10 is accommodated in the container 20, together with the mirror 4 described above. The spatial light modulator 10 shown in FIG. 5 includes the light modulation element 11, a substrate 12, a metal block 13, a temperature sensor 14, and a cooler 15.

The substrate 12 has a first surface 12a and a second surface 12b. The first surface 12a faces the mirror 4. The second surface 12b faces opposite to the first surface 12a, and faces the heat sink 22. The light modulation element 11 is mounted on the first surface 12a of the substrate 12 such that the light incident and emitting surface 11a (refer to FIG. 2) faces the mirror 4.

An opening 12c having a substantially rectangular shape is formed in the substrate 12. When viewed in a normal direction of the first surface 12a and the second surface 12b, the opening 12c overlaps the light modulation element 11. A back surface 11b of the light modulation element 11 is exposed from the opening 12c. The back surface 11b is a surface opposite to the light incident and emitting surface 11a. The metal block 13 is disposed in the opening 12c. The metal block 13 is thermally coupled to or in contact with the back surface 11b of the light modulation element 11. The metal block 13 is, for example, a copper block.

The temperature sensor 14 and the cooler 15 constitute the temperature adjustment unit 16 shown in FIG. 1. The temperature sensor 14 detects the ambient temperature of the liquid crystal layer 115 (refer to FIG. 2) of the light modulation element 11. The temperature sensor 14 is, for example, a thermistor, and changes the resistance value according to the ambient temperature of the liquid crystal layer 115. In the illustrated example, the temperature sensor 14 is disposed inside the metal block 13. The temperature sensor 14 is only required to be disposed in the vicinity of the light modulation element 11, and may be disposed outside the metal block 13 (for example, on the substrate 12 or the like). In the present disclosure, the temperature of the liquid crystal layer 115 is not limited only to the actual temperature of the liquid crystal layer 115, and also includes the ambient temperature of the liquid crystal layer 115.

The cooler 15 is disposed at a position where the metal block 13 is sandwiched between the cooler 15 and the light modulation element 11. The cooler 15 includes, for example, a Peltier element. A heat absorbing surface of the Peltier element is thermally coupled to or in contact with the metal block 13. A heat dissipating surface of the Peltier element is thermally coupled to or in contact with an inner surface 22a of the heat sink 22. The inner surface 22a of the heat sink 22 is a surface opposite to the outer surface on which the plurality of projections are provided. The cooler 15 cools the light modulation element 11 (particularly, the liquid crystal layer 115). The cooler 15 is controlled by, for example, a control driver circuit provided on the substrate 12. The cooler 15 cools the liquid crystal layer 115 through the metal block 13 such that the temperature detected by the temperature sensor 14 approaches a set temperature. Accordingly, the actual temperature of the liquid crystal layer 115 also approaches the set temperature.

The laser light La output from the light source 3 (refer to FIG. 1) passes through the optical window 21c on the side surface 21b of the housing 21, and reaches the reflecting surface 41 of the mirror 4. The laser light La is reflected by the reflecting surface 41, and is incident on the light incident and emitting surface 11a of the light modulation element 11. The light modulation element 11 modulates the phase of the laser light La for each pixel. The laser light Lb after modulation output from the light modulation element 11 is reflected by the reflecting surface 42 of the mirror 4. The laser light Lb passes through the optical window 21c on the side surface 21a of the housing 21, and is output to the outside of the housing 21 (the image-forming optical system 5 shown in FIG. 1).

Referring again to FIG. 1, the controller 7 of the present embodiment will be described. The controller 7 can be physically configured as a normal computer including a processor (CPU), main storage devices such as a ROM and a RAM, input devices such as a keyboard, a mouse, and a touch screen, an output device such as a display (including a touch screen), and an auxiliary storage device such as a hard disk. The controller 7 is electrically connected to the light source 3, the light modulation element 11, and the temperature adjustment unit 16. The controller 7 provides information A1 to the light source 3 or receives the information A1 from the light source 3 via the external control board 17. The information A1 is information regarding the set intensity of the laser light La. In addition, the controller 7 provides information A2 to the light modulation element 11 via the external control board 17. The information A2 is information regarding a gradation value indicating a target phase modulation amount for each of the plurality of pixels of the light modulation element 11. In addition, the controller 7 provides information A3 to the control driver circuit of the temperature adjustment unit 16 via the external control board 17. The information A3 is information regarding the set temperature of the cooler 15.

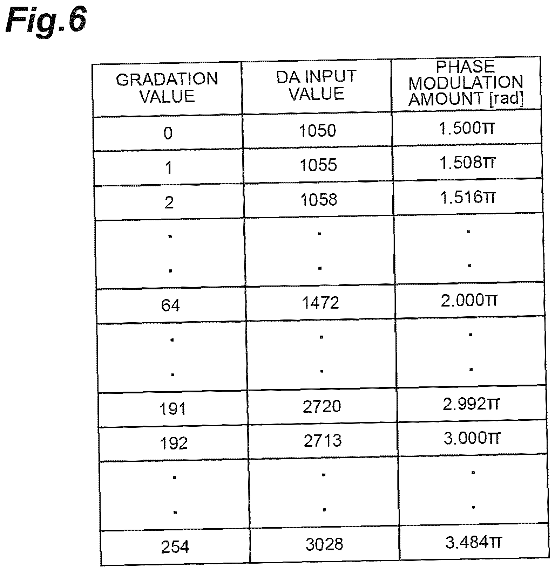

Generally, the phase modulation amount of each pixel of the light modulation element 11 has a nonlinear relationship with the magnitude of a voltage applied to each of the pixel electrodes 114. For that reason, the external control board 17 has a lookup table for converting a gradation value input from the controller 7 into the magnitude of a voltage. The external control board 17 converts the gradation value into an analog voltage value using the lookup table, and inputs the analog voltage value to the drive circuit layer 119. FIG. 6 is a view showing an example of the lookup table. The lookup table may store analog voltage values as input values (DA input values) to a digital-to-analog converter. The gradation value is a digital signal with the number of gradations N (from 0 to N-1), where N = 256 in the present embodiment. The pixel input values of all N gradations from 0 to N-1 indicate the phase modulation amount for one period from 0 to $2\pi$. The phase modulation amount is also shown in FIG. 6 for reference; however, the drive circuit layer 119 does not have information regarding the phase modulation amount. The drive circuit layer 119 applies a voltage to the pixel electrode 114 of each pixel based on the analog voltage value input for each pixel. As will be described later, since the refractive index of the liquid crystal layer 115 decreases as the temperature of the liquid crystal layer 115 increases, the phase modulation amount caused by the liquid crystal layer 115 when a certain magnitude of voltage is applied decreases as the temperature of the liquid crystal layer 115 increases. Therefore, the external control board 17 has a different lookup table for each temperature of the liquid crystal layer 115. The drive circuit layer 119 may have a lookup table. In this case, the drive circuit layer 119 converts a gradation value input from the controller 7 into an analog voltage value using the lookup table. Then, the drive circuit layer 119 applies a voltage to the pixel electrode 114 of each pixel based on the converted analog voltage value. Alternatively, the controller 7 may have a lookup table. In this case, the controller 7 converts a gradation value into an analog voltage value using the lookup table. Then, the drive circuit layer 119 applies a voltage to the pixel electrode 114 of each pixel based on the analog voltage value input from the controller 7.

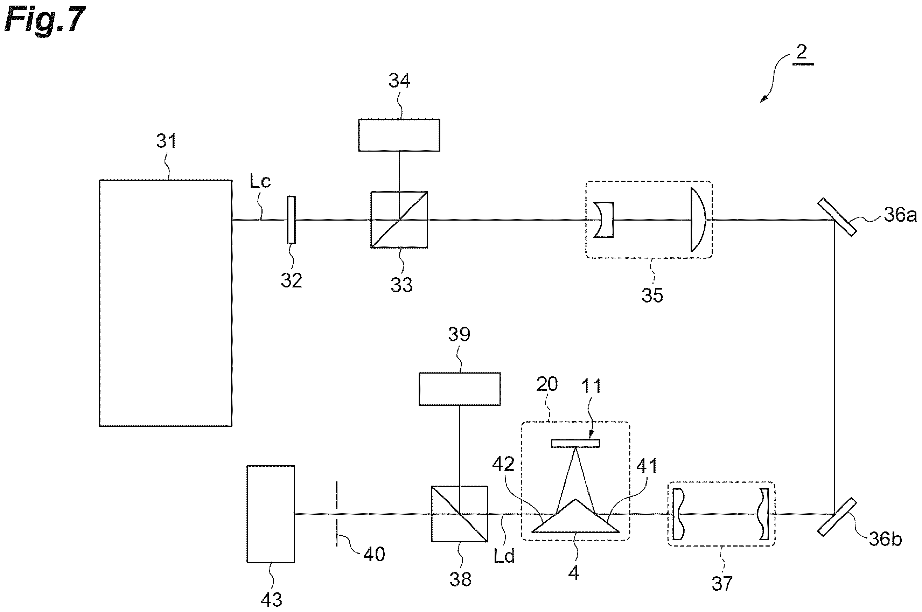

FIG. 7 is a view schematically showing a configuration of a test device 2. The test device 2 is a device for examining a relationship between the phase modulation amount of the light modulation element 11 and an application voltage to the pixel electrode 114. The test device 2 includes a laser light source 31, a half-wave plate 32, a polarizing beam splitter 33, a light absorber 34, a beam expander 35, a dielectric mirror 36a, a dielectric mirror 36b, a homogenizer 37, a polarizing beam splitter 38, a light absorber 39, an aperture 40, and a power meter 43.

The laser light source 31 outputs test light Lc that simulates the laser light La. The test light Lc passes through the half-wave plate 32, and then is incident on the polarizing beam splitter 33. A polarization direction of the test light Lc is adjusted by the half-wave plate 32, and only a first polarized component of the test light Lc having a predetermined polarization direction passes through the polarizing beam splitter 33. The remaining second polarized component of the test light Lc, excluding the first polarized component, is reflected by the polarizing beam splitter 33, and is absorbed by the light absorber 34. The half-wave plate 32 and the polarizing beam splitter 33 rotate the polarization direction of the test light Lc by 45° with respect to an alignment direction of the liquid crystal in the liquid crystal layer 115 of the light modulation element 11.

The beam expander 35 expands the beam diameter of the test light Lc to match the beam diameter of the test light Lc with the size (for example, 16 mm × 12.8 mm) of the modulation surface of the light modulation element 11. The beam diameter of the test light Lc before expansion is, for example, 7 mm. The beam diameter of the test light Lc after expansion is, for example, 11 mm when the size of the modulation surface of the light modulation element 11 is, for example, 16 mm × 12.8 mm. The beam expander 35 can be configured, for example, by a combination of a convex lens and a concave lens. The test light Lc after the expansion of the beam diameter is guided to the homogenizer 37 by the dielectric mirrors 36a and 36b. The test light Lc is caused to have a uniform light intensity distribution in a region having a specific shape (for example, a circular shape) by the homogenizer 37.

The mirror 4 accommodated in the container 20 is disposed on an optical axis between the homogenizer 37 and the polarizing beam splitter 38. The test light Lc output from the homogenizer 37 is reflected by the mirror 4, and is input to the light modulation element 11. At this time, the polarization direction of test light Ld after modulation rotates according to the phase modulation amount provided by the light modulation element 11. The test light Ld after modulation output from the light modulation element 11 is reflected by the mirror 4, and reaches the polarizing beam splitter 38. Only a predetermined polarized component of the test light Ld passes through the polarizing beam splitter 38, then passes through the aperture 40, and is input to the power meter 43. An opening diameter of the aperture 40 is, for example, 6 mm. The remaining components of the test light Ld, excluding the predetermined polarized component, are reflected by the polarizing beam splitter 38, and are absorbed by the light absorber 39. The power meter 43 measures a light intensity of the test light Ld that has passed through the aperture 40. In the test device 2, the light amount of the polarized components of the test light Ld that capable of passing through the polarizing beam splitter 38 and the aperture 40 changes according to the phase modulation amount provided by the light modulation element 11. Therefore, a phase change amount in the light modulation element 11 is observed as an intensity change amount in the power meter 43.

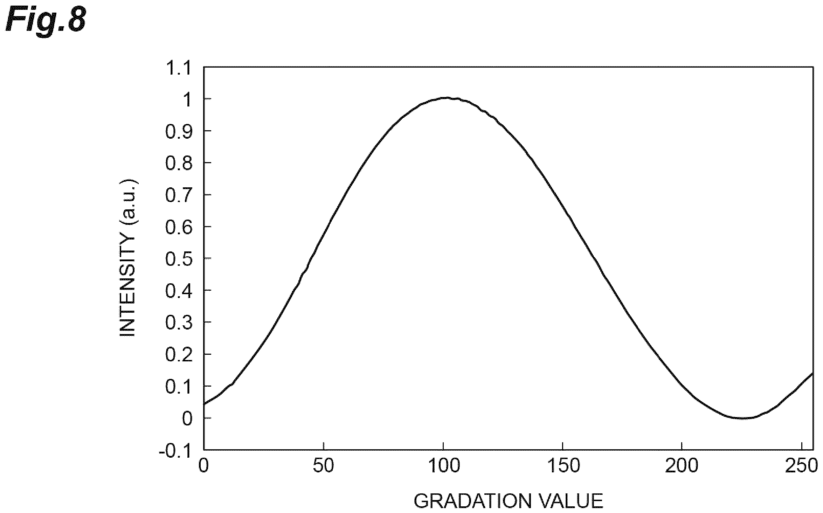

FIG. 8 is a graph showing an example of a relationship between the gradation value corresponding to the phase change amount and the light intensity measured by the power meter 43. A light intensity I measured by the power meter 43 is expressed by Formula (1) below. $\theta$ is the phase modulation amount, and $I_n$ is a constant.

[Formula 1]

$$I = I_n \cos^2 \theta \qquad \cdot \cdot \cdot \quad (1)$$

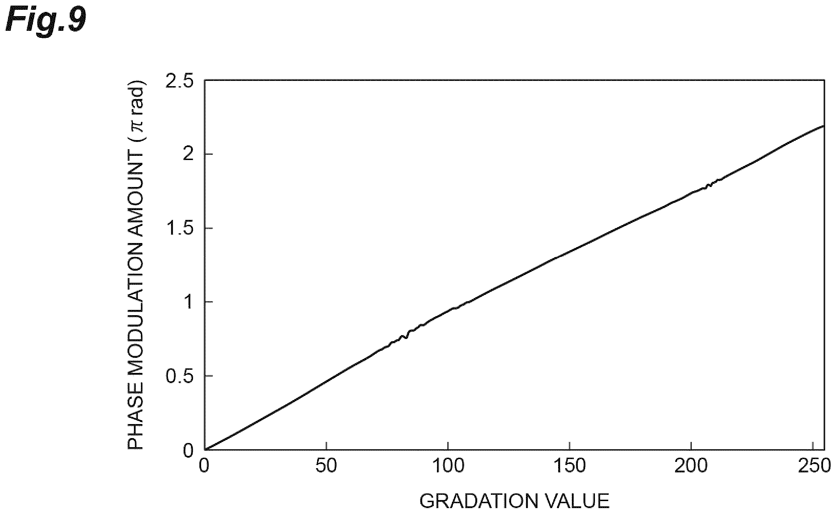

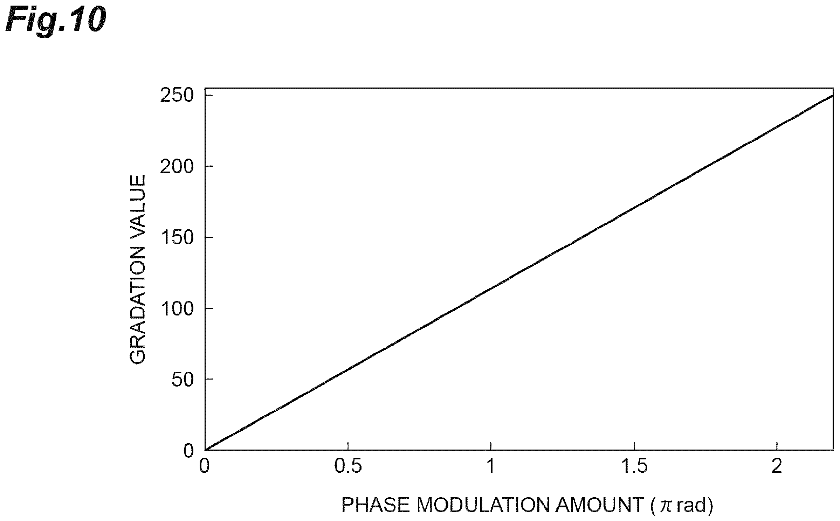

FIG. 9 is a graph showing the result of measuring a relationship between the gradation value input to the light modulation element 11 and the phase modulation amount using the test light Lc having a pulse width of 10 picoseconds, a wavelength of 1030 nm, and a repetition frequency of 1 MHz. The horizontal axis represents the gradation value, and the vertical axis represents the phase modulation amount ($\pi$ rad). As shown in FIG. 9, the gradation value and the phase modulation amount have an approximately linear relationship. FIG. 10 is a graph showing the relationship between the gradation value and the phase modulation amount, with the horizontal axis representing the phase modulation amount ($\pi$ rad) and the vertical axis representing the gradation value. A gradation value for obtaining a target phase modulation amount can be obtained by approximating the graph shown in FIG. 10 using a polynomial. For example, when the graph shown in FIG. 10 is approximated by a linear function, Formula (2) below is obtained.

[Formula 2]

$$\text{Gradation value} = 117 \times \text{Phase modulation amount} \quad ... (2)$$

From Formula (2), for example, $2 \times 117 = 234$ is obtained as the gradation value for obtaining a phase modulation amount of $2\pi$ (rad).

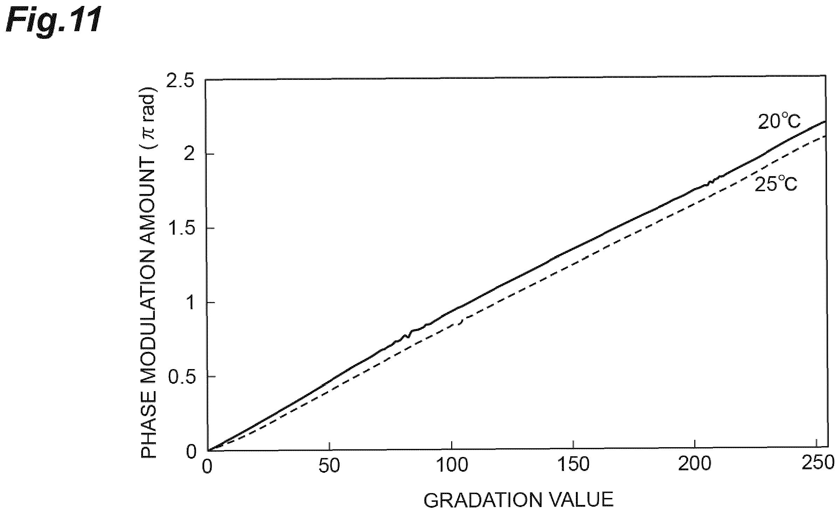

Here, the temperature of the liquid crystal layer 115 varies with changes in environmental temperature or irradiation with the laser light La. Since the refractive index of the liquid crystal layer 115 decreases as the temperature of the liquid crystal layer 115 increases, the phase modulation amount caused by the liquid crystal layer 115 when a certain magnitude of voltage is applied decreases as the temperature of the liquid crystal layer 115 increases. As one example, FIG. 11 is a graph showing a relationship between the gradation value and the phase change amount when the temperature of the liquid crystal layer 115 is controlled to 20°C and 25°C. As shown in FIG. 11, the higher the temperature of the liquid crystal layer 115 is, the smaller the phase change amount becomes with respect to the gradation value. Therefore, the cooler 15 keeps the temperature of the liquid crystal layer 115 constant by bringing the temperature of the liquid crystal layer 115 closer to the set temperature. Accordingly, the phase modulation amount can be controlled with high accuracy.

However, the temperature sensor 14 of the present embodiment is disposed inside the metal block 13. In such a manner, in many cases, the temperature sensor 14 is disposed at a position separated from the liquid crystal layer 115. Therefore, various components such as the silicon substrate 110, the dielectric multilayer film 117, and the drive circuit layer 119 are interposed between the liquid crystal layer 115 and the temperature sensor 14, and the temperature detected by the temperature sensor 14 deviates from the temperature of the liquid crystal layer 115. Particularly, when the intensity of the laser light La incident on the liquid crystal layer 115 increases, the temperature of the liquid crystal layer 115 increases significantly due to the energy of the laser light La, and the deviation in temperature between the liquid crystal layer 115 and the temperature sensor 14 increases. When the deviation in temperature between the liquid crystal layer 115 and the temperature sensor 14 is large, it becomes difficult to accurately set the magnitude of the application voltage even when the temperature of the liquid crystal layer 115 detected by the temperature sensor 14 is used. As a result, an actual phase modulation amount deviates from the target phase modulation amount.

Therefore, the controller 7 of the present embodiment determines the set temperature of the cooler 15 based on the set intensity of the laser light La. Namely, when the temperature of the liquid crystal layer 115 is to be brought closer to a predetermined temperature, the controller 7 determines the set temperature of the cooler 15 based on the set intensity of the laser light La such that the larger the set intensity of the laser light La is, the lower the set temperature of the cooler 15 becomes than the predetermined temperature. In other words, when the temperature of the liquid crystal layer 115 is to be brought closer to the predetermined temperature, the controller 7 determines the set temperature of the cooler 15 based on the set intensity of the laser light La such that the set temperature of the cooler 15 becomes lower than the predetermined temperature and the larger the set intensity of the laser light La is, the larger the difference between the set temperature of the cooler 15 and the predetermined temperature becomes. The lookup table does not show a relationship between the set temperature of the cooler 15 and the magnitude of the application voltage, but shows a relationship between the phase modulation amount at a predetermined temperature such as room temperature and the magnitude of the application voltage. Alternatively, the lookup table shows a relationship between the phase modulation amount at the set temperature of the cooler 15 and the magnitude of the application voltage when it is assumed that the set intensity of the laser light La is zero.

Specifically, the controller 7 holds, in advance, a data table showing the relationship between the set intensity of the laser light La and the set temperature of the cooler 15. The controller 7 determines the set temperature of the cooler 15 by referring to the data table based on the set intensity of the laser light La that is known. Alternatively, the controller 7 stores, in advance, a calculation formula (for example, Formula (3) to be described later) indicating the relationship between the set intensity of the laser light La and the set temperature of the cooler 15. The controller 7 determines the set temperature of the cooler 15 by applying the set intensity of the laser light La, which is known, to the calculation formula. To Hold the calculation formula means to hold coefficients included in the calculation formula.

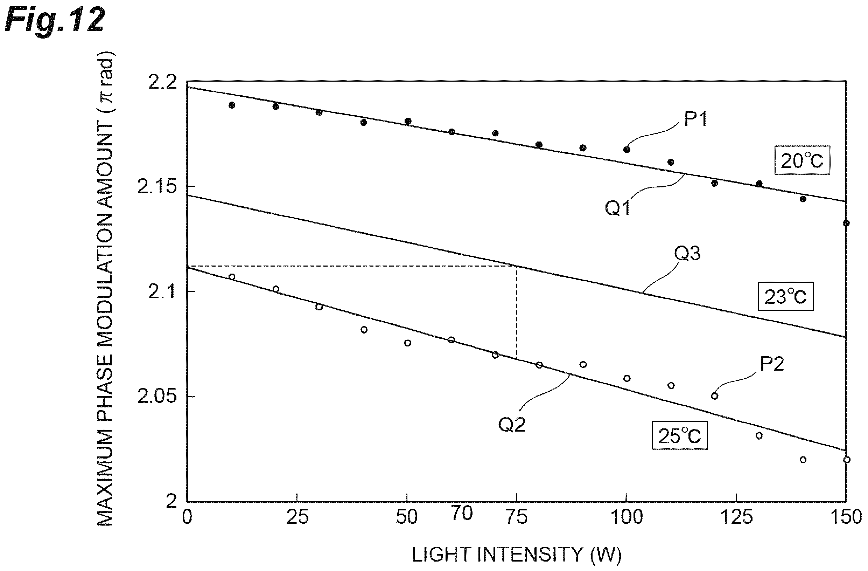

FIG. 12 is a graph showing one example of a relationship between the light intensity of the test light Lc and a maximum phase modulation amount of the light modulation element 11 when the set temperature of the cooler 15 is 20°C and 25°C. In FIG. 12, the horizontal axis represents the light intensity (W) of the test light Lc, and the vertical axis represents the maximum phase modulation amount ($\pi$ rad). Plots P1 in the figure indicate the measured values of the maximum phase modulation amount when the set temperature of the cooler 15 is 20°C, and Q1 is an approximate straight line thereof. Plots P2 in the figure indicate the measured values of the maximum phase modulation amount when the set temperature of the cooler 15 is 25°C, and Q2 is an approximate straight line thereof. In the figure, an approximate straight line Q3 when the set temperature of the cooler 15 is 23°C is also shown.

As is clear from FIG. 12, under the condition that the set temperature of the cooler 15 is the same, as the light intensity of the test light Lc increases, the maximum phase modulation amount of the light modulation element 11 decreases. Furthermore, the light intensity of the test light Lc and the maximum phase modulation amount of the light modulation element 11 have an approximately linear relationship. Under the condition that the light intensity of the test light Lc is the same, the higher the set temperature of the cooler 15 is, the smaller the maximum phase modulation amount becomes. For example, in this example, the maximum phase modulation amount when the set temperature is 25°C and the light intensity of the test light Lc is 10 W is 2.105$\pi$ (rad). The maximum phase modulation amount when the set temperature is 25°C and the light intensity of the test light Lc is 75 W is 2.066$\pi$ (rad). The maximum phase modulation amount when the set temperature is 20°C and the light intensity of the test light Lc is 10 W is 2.193$\pi$ (rad). The maximum phase modulation amount when the set temperature is 20°C and the light intensity of the test light Lc is 75 W is 2.167$\pi$ (rad). From these findings, it can be seen that even when the light intensity of the laser light La varies, the maximum phase modulation amount of the light modulation element 11 can be corrected by controlling the set temperature of the cooler 15. Namely, by compensating gaps between the approximate straight lines Q1 to Q3 corresponding to each temperature and changing the set temperature of the cooler 15 in response to a change in the set intensity of the laser light La, the phase modulation amount can be stabilized even when the set intensity of the laser light La is changed.

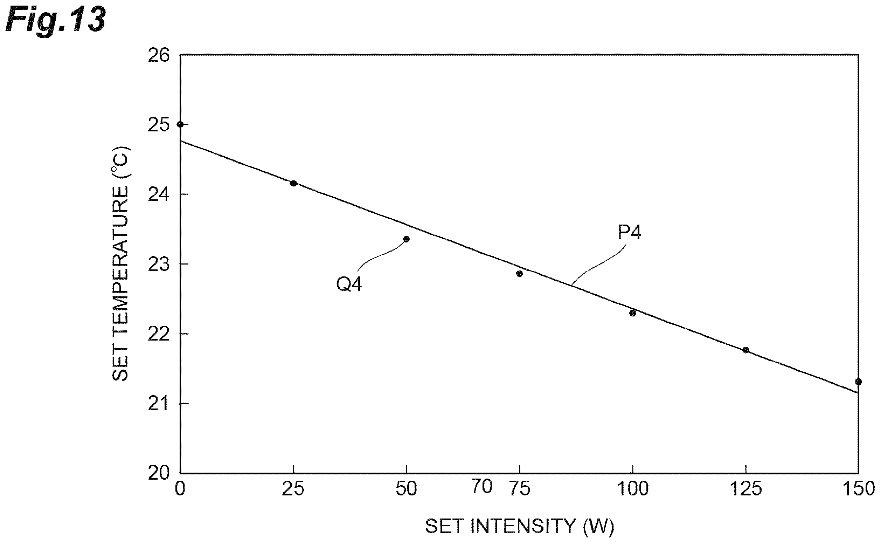

FIG. 13 is a graph showing an example of the relationship between the set intensity of the laser light La and the set temperature of the cooler 15, which allows the phase modulation amount to be kept constant. In the same figure, the horizontal axis represents the set intensity (W) of the laser light La, and the vertical axis represents the set temperature (°C) of the cooler 15. Plots P4 in the figure indicate the measured values of the set temperature with respect to the set intensity when the phase modulation amount is constant. Q4 in the figure is an approximate straight line thereof. The approximate straight line Q4 can be obtained, for example, by Formula (3) below. T is the set temperature (°C) of the cooler 15, and I is the set intensity (W) of the laser light La.

[Formula 3]

$$T = -0.0241 \times I + 24.773 \qquad \cdots \ (3)$$

As is clear from Formula (3), the set temperature of the cooler 15 is proportional to the set intensity of the laser light La. According to Formula (3), for example, by setting the set temperature of the cooler 15 to 24.5°C when the set intensity of the laser light La is 10 W, and setting the set temperature of the cooler 15 to 23°C when the set intensity of the laser light La is 75 W, the phase modulation amounts for both settings are made approximately equal to each other.

The degree of increase in the temperature of the liquid crystal layer 115 with respect to the set intensity of the laser light La differs depending on conditions (pulse width, wavelength, repetition frequency, and the like) of the laser light La. Therefore, the degree of variation in the phase modulation amount with respect to the set intensity of the laser light La also differs depending on the state of the laser light La. Therefore, a plurality of the data tables showing the relationship between the set intensity of the laser light La and the set temperature of the cooler 15, or a plurality of the calculation formulas indicating the relationship between the set intensity of the laser light La and the set temperature of the cooler 15 may be prepared according to the number of combinations of conditions of the laser light La.

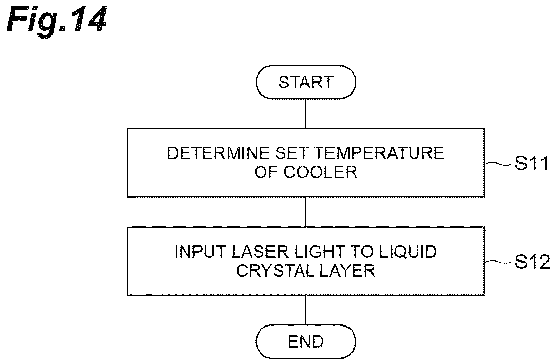

FIG. 14 is a flowchart showing a method for controlling the spatial light modulator 10 according to the present embodiment. First, when the temperature of the liquid crystal layer 115 is to be brought closer to the predetermined temperature, the controller 7 determines the set temperature of the cooler 15 based on the set intensity of the laser light La such that the larger the set intensity of the laser light La is, the lower the set temperature becomes than the predetermined temperature (determination step S11). At this time, the controller 7 determines the set temperature of the cooler 15 based on the set intensity of the laser light La, which is known, while referring to the data table showing the relationship between the set intensity of the laser light La and the set temperature of the cooler 15. Alternatively, the controller 7 determines the set temperature of the cooler 15 by applying the set intensity of the laser light La, which is known, to the calculation formula indicating the relationship between the set intensity of the laser light La and the set temperature of the cooler 15.

Subsequently, the laser light La having an intensity corresponding to the set intensity is input to the liquid crystal layer 115 of the light modulation element 11 (light input step S12). The laser light La is phase-modulated for each pixel in the liquid crystal layer 115, and the laser light Lb after modulation is output from the light modulation element 11.

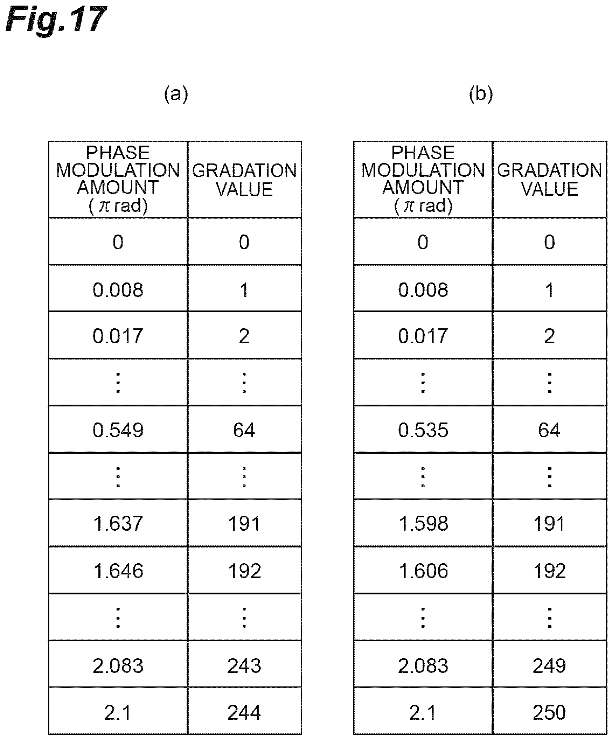

Effects obtained by the light modulation device 1A according to the present embodiment and the method for controlling the spatial light modulator 10 according to the present embodiment described above can be summarized as follows. In the light modulation device 1A of the present embodiment and the method for controlling the spatial light modulator 10 according to the present embodiment, in the controller 7 or determination step S11, when the temperature of the liquid crystal layer 115 is to be brought closer to the predetermined temperature, the set temperature of the cooler 15 is determined based on the set intensity of the laser light La such that the larger the set intensity of the laser light La input to the liquid crystal layer 115 is, the lower the set temperature of the cooler 15 becomes than the predetermined temperature. Accordingly, the temperature of the liquid crystal layer 115 can be brought closer to constant temperature regardless of the magnitude of the intensity of the laser light La incident on the liquid crystal layer 115. As a result, even when a common lookup table is used, the magnitude of the application voltage can be accurately set, and the actual phase modulation amount can be brought closer to the target phase modulation amount with high accuracy. Therefore, according to the light modulation device 1A of the present embodiment and the method for controlling the spatial light modulator 10 according to the present embodiment, the deviation of the actual phase modulation amount from the target phase modulation amount can be reduced. In addition, unlike a second embodiment to be described later, regardless of the magnitude of the intensity of the laser light La, reference data (refer to FIG. 17) indicating a correspondence between the phase modulation amount and the gradation value can be used in common.

As in the present embodiment, the controller 7 may hold, in advance, a data table showing the relationship between the set intensity of the laser light La and the set temperature of the cooler 15, and determine the set temperature using the data table. Alternatively, the controller 7 may hold, in advance, a calculation formula indicating the relationship between the set intensity of the laser light La and the set temperature of the cooler 15, and determine the set temperature using the calculation formula. In both cases, the controller 7 can easily determine the set temperature of the cooler 15 according to the set intensity of the laser light La. Similarly, in determination step S11, the set temperature of the cooler 15 may be determined using the data table showing the relationship between the set intensity of the laser light La and the set temperature of the cooler 15. Alternatively, in determination step S11, the set temperature of the cooler 15 may be determined using the calculation formula indicating the relationship between the set intensity of the laser light La and the set temperature of the cooler 15. In both cases, in determination step S11, the set temperature of the cooler 15 can be easily determined according to the set intensity of the laser light La. The function of the controller 7 may be provided in the external control board 17 or the drive circuit layer 119 of the light modulation element 11.

As in the present embodiment, the set temperature of the cooler 15 may be proportional to the set intensity of the laser light La. According to the findings of the present inventors, the temperature of the liquid crystal layer 115 deviates from the temperature detected by the temperature sensor 14 in proportion to the intensity of the laser light La input to the liquid crystal layer 115. By determining the set temperature of the cooler 15 to be proportional to the set intensity of the laser light La, the temperature of the liquid crystal layer 115 can be brought closer to a more constant temperature regardless of the magnitude of the intensity of the laser light La incident on the liquid crystal layer 115. As a result, the actual phase modulation amount can be brought closer to the target phase modulation amount with higher accuracy. Therefore, the deviation of the actual phase modulation amount from the target phase modulation amount can be further reduced.

[Second embodiment]

Subsequently, the second embodiment of the present disclosure will be described. In the present embodiment, the controller 7 determines the magnitude of a voltage applied to the plurality of pixel electrodes 114 instead of determining the set temperature of the cooler 15. Namely, when the controller 7 sets the phase of each pixel of the liquid crystal layer 115 to a predetermined phase, the controller 7 determines the magnitude of the voltage applied to the plurality of pixel electrodes 114 such that the larger the set intensity of the laser light La is, the larger the voltage corresponding to the predetermined phase becomes.

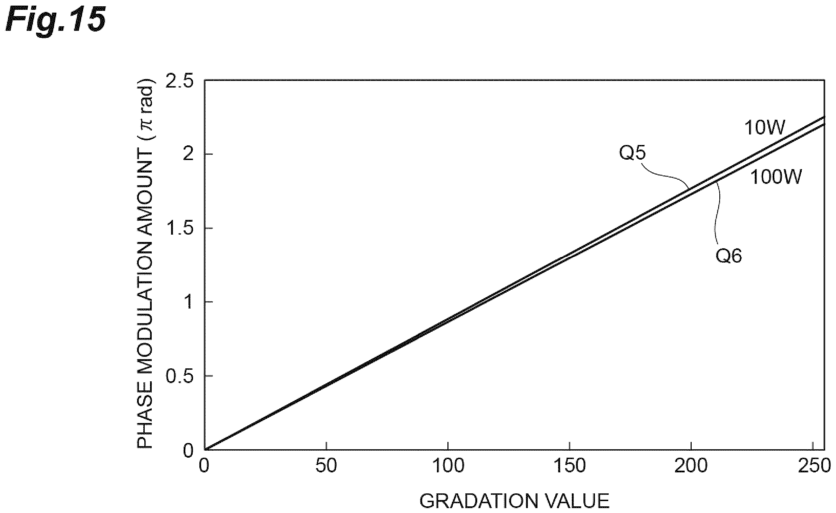

FIG. 15 is a graph showing one example of a relationship between the gradation value and the phase modulation amount. The horizontal axis represents the gradation value, and the vertical axis represents the phase modulation amount ($\pi$ rad). In the same figure, an approximate straight line Q5 showing the relationship when the light intensity of the laser light La is 10 W, and an approximate straight line Q6 showing the relationship when the light intensity of the laser light La is 100 W are shown. As is clear from FIG. 15, when the gradation value is the same, the phase modulation amount decreases as the light intensity of the laser light La increases. The reason is that, as described in the first embodiment, the larger the light intensity of the laser light La is, the more the temperature of the liquid crystal layer 115 deviates and rises from the set temperature of the cooler 15, and the refractive index of the liquid crystal layer 115 decreases by that amount. Therefore, in the present embodiment, the larger the set intensity of the laser light La is, the larger the application voltage corresponding to a predetermined phase is set, so that the phase modulation amount is kept constant regardless of a variation in the set intensity of the laser light La.

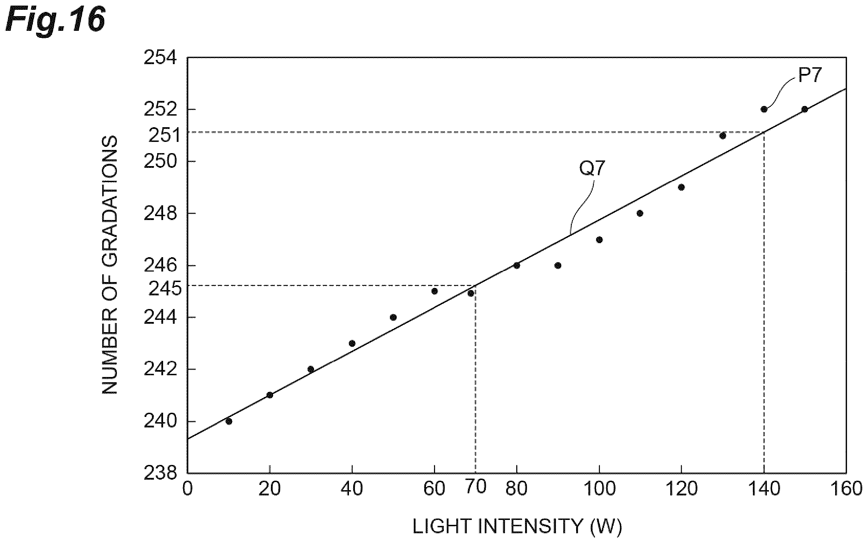

Specifically, the controller 7 holds, in advance, correlation data indicating a correlation between the number of gradations used in a lookup table (for example, refer to FIG. 6) showing the relationship between the magnitude of the application voltage to each of the pixel electrodes 114 and each of a plurality of gradation values, the lookup table being held by the external control board 17, and the set intensity of the laser light La. FIG. 16 is a graph showing one example of such correlation data. In the same figure, the horizontal axis represents the light intensity of the laser light La, and the vertical axis represents the number of gradations. In the figure, plots P7 indicate the measured values of the gradation values with respect to the set intensity of the laser light La when the phase modulation amount is constant. Q7 in the figure is an approximate straight line thereof. As shown in FIG. 16, when the phase modulation amount is constant, the set intensity of the laser light La and the gradation value have an approximately linear relationship. The controller 7 determines the number of gradations, which is used in the lookup table held by the external control board 17, using such correlation data, based on the set intensity of the laser light La.

In addition, the controller 7 has reference data indicating a correspondence between the phase modulation amount caused by the liquid crystal layer 115 and each gradation value of the lookup table. (a) and (b) in FIG. 17 are views showing examples of such reference data. The reference data shown in (a) of FIG. 17 indicates a correspondence relationship between each value of the phase modulation amount from 0 (rad) to $2.1\pi$ (rad) and each gradation value from 0 to 244 when the number of gradations is 245. The reference data shown in (b) of FIG. 17 indicates a correspondence relationship between each value of the phase modulation amount from 0 (rad) to $2.1\pi$ (rad) and each gradation value from 0 to 250 when the number of gradations is 251. The controller 7 refers to the correlation data shown in FIG. 16, and when the set intensity of the laser light La is 70 W, the controller 7 sets the number of gradations to 245, and uses the reference data shown in (a) of FIG. 17. In addition, the controller 7 refers to the correlation data shown in FIG. 16, and when the set intensity of the laser light La is 140 W, the controller 7 sets the number of gradations to 251, and uses the reference data shown in (b) of FIG. 17.

The controller 7 of the present embodiment receives an input value indicating the target phase modulation amount from the outside of the light modulation device 1A. The controller 7 converts the input value into a gradation value using the reference data shown in FIG. 17. The controller 7 provides the converted gradation value to the light modulation element 11. The light modulation element 11 determines an application voltage corresponding to the gradation value using the lookup table, and applies the application voltage to the pixel electrode 114.

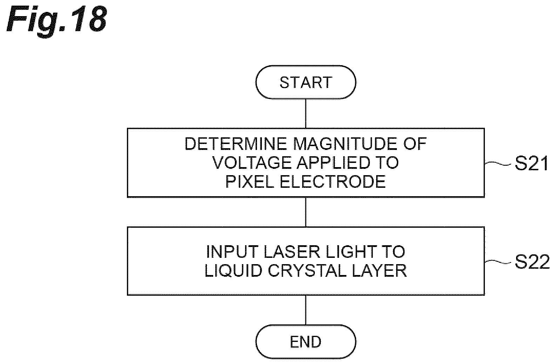

FIG. 18 is a flowchart showing a method for controlling the spatial light modulator 10 according to the present embodiment. First, when the phase of each pixel of the liquid crystal layer 115 is set to the predetermined phase, the controller 7 determines the magnitude of a voltage applied to each of the pixel electrodes 114 such that the larger the set intensity of the laser light La is, the larger the voltage corresponding to the predetermined phase becomes (determination step S21). At this time, the controller 7 determines, based on the set intensity of the laser light La, the number of gradations used in the lookup table using the correlation data (for example, refer to FIG. 16) indicating the correlation between the set intensity of the laser light La and the number of gradations used in the lookup table (for example, refer to FIG. 6) showing the relationship between the magnitude of the application voltage and each of the plurality of gradation values. Further, the controller 7 has the reference data (for example, refer to FIG. 17) indicating the correspondence between the phase modulation amount caused by the liquid crystal layer 115 and each gradation value of the lookup table, receives an input value indicating the phase modulation amount from the outside of the light modulation device 1A, and converts the input value into a gradation value using the reference data.

Subsequently, the laser light La having an intensity corresponding to the set intensity is input to the liquid crystal layer 115 of the light modulation element 11 (light input step S22). The laser light La is phase-modulated for each pixel in the liquid crystal layer 115, and the laser light Lb after modulation is output from the light modulation element 11.

Effects obtained by the light modulation device 1A according to the present embodiment and the method for controlling the spatial light modulator 10 according to the present embodiment described above can be summarized as follows. As described above, when the intensity of the laser light La incident on the liquid crystal layer 115 increases, the temperature of the liquid crystal layer 115 increases significantly due to the energy of the laser light La, and the deviation in temperature between the liquid crystal layer 115 and the temperature sensor 14 increases. Since the refractive index of the liquid crystal decreases as the temperature increases, the phase modulation amount caused by the liquid crystal layer 115 when a certain magnitude of voltage is applied decreases as the temperature of the liquid crystal layer 115 increases (namely, as the intensity of the laser light La input to the liquid crystal layer 115 increases). Therefore, in the light modulation device 1A of the present embodiment and the method for controlling the spatial light modulator 10 according to the present embodiment, in the controller 7 or determination step S21, when the phase of each pixel of the liquid crystal layer 115 is set to the predetermined phase, the magnitude of the voltage applied to each of the pixel electrodes 114 is determined such that the larger the set intensity of the laser light La is, the larger the voltage corresponding to the predetermined phase becomes. Accordingly, even when the temperature of the liquid crystal layer 115 varies with a variation in the intensity of the laser light La, the actual phase modulation amount can be brought closer to the target phase modulation amount with high accuracy. Therefore, according to the light modulation device 1A according to the present embodiment and the method for controlling the spatial light modulator 10 according to the present embodiment, the deviation of the actual phase modulation amount from the target phase modulation amount can be reduced.

As in the present embodiment, in the controller 7 or determination step S21, the number of gradations used in the lookup table showing the relationship between the magnitude of the voltage applied to each of the pixel electrodes 114 and each of the plurality of gradation values may be determined based on the set intensity of the laser light La using correlation data that indicates the correlation between the number of gradations used in the lookup table and the set intensity of the laser light La. In this case, in the controller 7 or determination step S21, the magnitude of the application voltage can be easily determined according to the set intensity of the laser light La.

As in the present embodiment, in the controller 7 or determination step S21, an input value indicating the phase modulation amount may be input from the outside of the light modulation device 1A, and the input value may be converted into a gradation value using the reference data indicating the correspondence between the phase modulation amount caused by the liquid crystal layer 115 and each gradation value of the lookup table. In this case, a person who uses the light modulation device 1A (or the control method thereof) can freely set the phase modulation amount. In the present embodiment as well, the function of the controller 7 may be provided in the external control board 17 or the drive circuit layer 119 of the light modulation element 11.

[Modification examples]

In the second embodiment described above, the controller 7 determines the number of gradations using the correlation data indicating the correlation between the number of gradations used in the lookup table and the set intensity of the laser light La, based on the set intensity of the laser light La. Meanwhile, in the present modification example, the controller 7 holds a plurality of lookup tables, each having a different number of gradations. The present modification example is the same as the second embodiment in that the controller 7 has correlation data indicating a correlation between the number of gradations and the set intensity of the laser light La. The controller 7 of the present modification example determines a lookup table to be used among the plurality of lookup tables using the correlation data, and provides the lookup table to the external control board 17, based on the set intensity of the laser light La. Then, similarly to the second embodiment, the controller 7 receives an input value indicating the phase modulation amount from the outside of the light modulation device 1A. The controller 7 holds a plurality of reference data indicating a correspondence between the phase modulation amount caused by the liquid crystal layer 115 and each gradation value in each of the plurality of lookup tables. The controller 7 converts the input value into a gradation value using reference data corresponding to the lookup table to be used among the plurality of reference data.

As in the present modification example, in the controller 7 or determination step S21, the correlation data indicating the correlation between the number of gradations and the set intensity of the laser light La may be used to determine the lookup table to be used among the plurality of lookup tables, each having a different number of gradations, based on the set intensity of the laser light La. In this case, in the controller 7 or determination step S21, the magnitude of the application voltage can be easily determined according to the set intensity of the laser light La.

As in the present modification example, in the controller 7 or determination step S21, an input value indicating the phase modulation amount may be input from the outside of the light modulation device 1A, and the input value may be converted into a gradation value using reference data corresponding to the lookup table to be used among the plurality of reference data indicating the correspondence between the phase modulation amount caused by the liquid crystal layer 115 and each gradation value in each of the plurality of lookup tables. In this case, a person who uses the light modulation device 1A (or the control method thereof) can freely set the phase modulation amount. Incidentally, in the present modification example, the function of the controller 7 may be provided in the external control board 17 or the drive circuit layer 119 of the light modulation element 11.

The light modulation device and the method for controlling the spatial light modulator according to the present invention are not limited to the embodiments described above, and various other modifications can be made. For example, the controller of the light modulation device may have both the function of the controller 7 according to the first embodiment and the function of the controller 7 according to the second embodiment. Namely, the controller may simultaneously lower the set temperature of the cooler 15 as the set intensity of the laser light La increases, and increase the application voltage corresponding to the predetermined phase as the set intensity of the laser light La increases.

In the first embodiment described above, the controller 7 determines the set temperature of the cooler 15 using the data table or the calculation formula indicating the relationship between the set intensity of the laser light La and the set temperature of the cooler 15; however, the method for determining the set temperature of the cooler 15 is not limited thereto. In the first embodiment described above, the set temperature of the cooler 15 is proportional to the set intensity of the laser light La; however, the relationship between the set temperature of the cooler 15 and the set intensity of the laser light La is not limited to a proportional relationship.

In each of the embodiments described above, a Peltier element has been provided as an example of the cooler; however, the cooler may have other configurations (for example, a water cooling system using a water cooling plate or the like).

Reference Signs List

1A: light modulation device, 2: test device, 3: light source, 4: mirror, 5: image-forming optical system, 6: condenser lens, 7: controller, 10: spatial light modulator, 11: light modulation element, 11a: light incident and emitting surface, 11b: back surface, 12: substrate, 12a: first surface, 12b: second surface, 12c: opening, 13: metal block, 14: temperature sensor, 15: cooler, 16: temperature adjustment unit, 17: external control board, 20: container, 21: housing, 21a, 21b, 21d, 21e: side surface, 21c: optical window, 21f; opening, 22: heat sink, 23: fan, 31: laser light source, 32: half-wave plate, 33, 38: polarizing beam splitter, 34, 39: light absorber, 35: beam expander, 36a, 36b: dielectric mirror, 37: homogenizer, 40: aperture, 41, 42: reflecting surface, 43: power meter, 51, 52: lens, 110: silicon substrate, 112: glass substrate, 112a: front surface, 112b: back surface, 113: transparent conductive film, 114: pixel electrode, 115: liquid crystal layer, 115a, 115b: alignment film, 116: transparent layer, 117: dielectric multilayer film, 118: light-shielding layer, 119: drive circuit layer, B: object, D1, D2: direction, La, Lb: laser light, Lc, Ld: test light, Q1 to Q6: approximate straight line.

**Claims**

1.   A light modulation device comprising:

a light source configured to output light having an intensity corresponding to a set intensity;
a spatial light modulator including a plurality of pixel electrodes arranged one-dimensionally or two-dimensionally, a liquid crystal layer configured to modulate a phase of the light according to a magnitude of an electric field formed by each of the plurality of pixel electrodes, a driver configured to apply a voltage to each of the plurality of pixel electrodes, and a cooler configured to cool the liquid crystal layer such that a temperature of the liquid crystal layer approaches a set temperature; and
a controller configured to determine the set temperature of the cooler based on the set intensity.

2.   The light modulation device according to claim 1,
wherein the controller holds, in advance, a data table showing a relationship between the set intensity and the set temperature, and determines the set temperature using the data table.

3.   The light modulation device according to claim 1,
wherein the controller holds, in advance, a calculation formula indicating a relationship between the set intensity and the set temperature, and determines the set temperature using the calculation formula.

4.   The light modulation device according to any one of claims 1 to 3,
wherein the set temperature is proportional to the set intensity.

5.   A light modulation device comprising:

a light source configured to output light having an intensity corresponding to a set intensity;
a spatial light modulator including a plurality of pixel electrodes arranged one-dimensionally or two-dimensionally, a liquid crystal layer configured to modulate a phase of the light according to a magnitude of an electric field formed by each of the plurality of pixel electrodes, a driver configured to apply a voltage to each of the plurality of pixel electrodes, and a cooler configured to cool the liquid crystal layer such that a temperature of the liquid crystal layer approaches a set temperature; and
a controller configured to determine a magnitude of the voltage applied to each of the plurality of pixel electrodes, wherein when the controller sets a phase of each pixel of the liquid crystal layer to a predetermined phase, the controller determines the magnitude of the voltage such that the voltage corresponding to the predetermined phase becomes larger as the set intensity becomes larger.

**6.** The light modulation device according to claim 5,

wherein the controller has correlation data indicating a correlation between the set intensity and the number of gradations, the number of gradations being used in a lookup table showing a relationship between the magnitude of the voltage and each of a plurality of gradation values, and
the controller determines the number of gradations used in the lookup table based on the set intensity using the correlation data.

**7.** The light modulation device according to claim 6,
wherein the controller has reference data indicating a correspondence between a phase modulation amount caused by the liquid crystal layer and each of the plurality of gradation values of the lookup table, receives an input value indicating the phase modulation amount from an outside of the light modulation device, and converts the input value into a gradation value using the reference data.

**8.** The light modulation device according to claim 5,
wherein the controller determines a lookup table to be used based on the set intensity using correlation data indicating a correlation between the number of gradations and the set intensity from among a plurality of lookup tables each showing a relationship between the magnitude of the voltage and each of a plurality of gradation values and having a different number of gradations.

**9.** The light modulation device according to claim 8,
wherein the controller has a plurality of reference data indicating a correspondence between a phase modulation amount caused by the liquid crystal layer and each of the plurality of gradation values of the plurality of lookup tables, receives an input value indicating the phase modulation amount from an outside of the light modulation device, and converts the input value into a gradation value using the reference data corresponding to the lookup table to be used among the plurality of reference data.

**10.** A method for controlling a spatial light modulator including a plurality of pixel electrodes arranged one-dimensionally or two-dimensionally, a liquid crystal layer configured to modulate a phase of light according to a magnitude of an electric field formed by each of the plurality of pixel electrodes, a driver configured to apply a voltage to each of the plurality of pixel electrodes, and a cooler configured to cool the liquid crystal layer such that a temperature of the liquid crystal layer approaches a set temperature, the method comprising:

a determination step of determining the set temperature of the cooler; and
a light input step of inputting light having an intensity corresponding to a set intensity to the liquid crystal layer,
wherein, in the determination step, the set temperature is determined based on the set intensity.

**11.** A method for controlling a spatial light modulator including a plurality of pixel electrodes arranged one-dimensionally or two-dimensionally, a liquid crystal layer configured to modulate a phase of light according to a magnitude of an electric field formed by each of the plurality of pixel electrodes, a driver configured to apply a voltage to each of the plurality of pixel electrodes, and a cooler configured to cool the liquid crystal layer such that a temperature of the liquid crystal layer approaches a set temperature, the method comprising:

a determination step of determining a magnitude of the voltage applied to each of the plurality of pixel electrodes; and
a light input step of inputting light having an intensity corresponding to a set intensity to the liquid crystal layer,
wherein, in the determination step, when a phase of each pixel of the liquid crystal layer is set to a predetermined phase, the magnitude of the voltage is determined such that the voltage corresponding to the predetermined phase becomes larger as the set intensity becomes larger.

Fig.1

EP 4 521 161 A1

# Fig.2

11

110

119

118

114

117

116

115b

115

112b

115a

113

112

112a(11a)

La

Lb

# Fig.3

*Fig.4*

Fig.5

EP 4 521 161 A1

## Fig.6

| GRADATION VALUE | DA INPUT VALUE | PHASE MODULATION AMOUNT [rad] |
|---|---|---|
| 0 | 1050 | 1.500π |
| 1 | 1055 | 1.508π |
| 2 | 1058 | 1.516π |
| . | . | . |
| . | . | . |
| 64 | 1472 | 2.000π |
| . | . | . |
| . | . | . |
| 191 | 2720 | 2.992π |
| 192 | 2713 | 3.000π |
| . | . | . |
| . | . | . |
| 254 | 3028 | 3.484π |

Fig.7

EP 4 521 161 A1

*Fig.8*

*Fig.9*

Fig.10

EP 4 521 161 A1

# Fig.11

Fig.12

EP 4 521 161 A1

# Fig.13

# Fig.14

```
        ┌──────────┐
        │  START   │
        └──────────┘
              │
  ┌───────────────────────────┐
  │   DETERMINE SET TEMPERATURE │ ～S11
  │         OF COOLER           │
  └───────────────────────────┘
              │
  ┌───────────────────────────┐
  │   INPUT LASER LIGHT TO LIQUID │ ～S12
  │        CRYSTAL LAYER        │
  └───────────────────────────┘
              │
        ┌──────────┐
        │   END    │
        └──────────┘
```

EP 4 521 161 A1

**Fig.15**

Fig.16

# *Fig.17*

(a)                                    (b)

| PHASE MODULATION AMOUNT ($\pi$ rad) | GRADATION VALUE |
|---|---|
| 0 | 0 |
| 0.008 | 1 |
| 0.017 | 2 |
| ⋮ | ⋮ |
| 0.549 | 64 |
| ⋮ | ⋮ |
| 1.637 | 191 |
| 1.646 | 192 |
| ⋮ | ⋮ |
| 2.083 | 243 |
| 2.1 | 244 |

| PHASE MODULATION AMOUNT ($\pi$ rad) | GRADATION VALUE |
|---|---|
| 0 | 0 |
| 0.008 | 1 |
| 0.017 | 2 |
| ⋮ | ⋮ |
| 0.535 | 64 |
| ⋮ | ⋮ |
| 1.598 | 191 |
| 1.606 | 192 |
| ⋮ | ⋮ |
| 2.083 | 249 |
| 2.1 | 250 |

# Fig.18

```
        ┌─────────────┐
        │    START    │
        └─────────────┘
               │
   ┌───────────────────────────┐
   │   DETERMINE MAGNITUDE OF   │
   │     VOLTAGE APPLIED TO     │ ~S21
   │      PIXEL ELECTRODE       │
   └───────────────────────────┘
               │
   ┌───────────────────────────┐
   │    INPUT LASER LIGHT TO    │ ~S22
   │    LIQUID CRYSTAL LAYER    │
   └───────────────────────────┘
               │
        ┌─────────────┐
        │     END     │
        └─────────────┘
```

**EP 4 521 161 A1**

| INTERNATIONAL SEARCH REPORT | International application No. |
|---|---|
| | **PCT/JP2023/024804** |

**A. CLASSIFICATION OF SUBJECT MATTER**

*G02F 1/133*(2006.01)i; *G02F 1/13*(2006.01)i
FI: G02F1/133 580; G02F1/13 505

According to International Patent Classification (IPC) or to both national classification and IPC

**B. FIELDS SEARCHED**

Minimum documentation searched (classification system followed by classification symbols)

G02F1/133; G02F1/13

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2011-150222 A (SEIKO EPSON CORP.) 04 August 2011 (2011-08-04) paragraphs [0019]-[0044], fig. 1-3 | 1-4, 10 |
| Y | | 5, 11 |
| A | | 6-9 |
| Y | JP 2011-209514 A (SEIKO EPSON CORP.) 20 October 2011 (2011-10-20) paragraphs [0006]-[0009], [0023]-[0042], [0054], [0055], fig. 1-3 | 5, 11 |
| A | | 1-4, 6-10 |
| Y | JP 2009-294266 A (CANON INC.) 17 December 2009 (2009-12-17) paragraph [0005], fig. 14 | 5, 11 |

☐ Further documents are listed in the continuation of Box C.    ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 August 2023** | **12 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

| INTERNATIONAL SEARCH REPORT<br>Information on patent family members | | | International application No.<br>**PCT/JP2023/024804** | |

| Patent document<br>cited in search report | | | Publication date<br>(day/month/year) | Patent family member(s) | Publication date<br>(day/month/year) |
|---|---|---|---|---|---|
| JP | 2011-150222 | A | 04 August 2011 | (Family: none) | |
| JP | 2011-209514 | A | 20 October 2011 | (Family: none) | |
| JP | 2009-294266 | A | 17 December 2009 | (Family: none) | |

Form PCT/ISA/210 (patent family annex) (January 2015)

**REFERENCES CITED IN THE DESCRIPTION**

**Patent documents cited in the description**

- JP 2022149927 A

- JP 2012168391 A